(19) Europäisches Patentamt
European Patent Office
Office européen des brevets

(11) **EP 3 555 550 B1**

(12) **FASCICULE DE BREVET EUROPEEN**

(45) Date de publication et mention
de la délivrance du brevet:
**24.02.2021 Bulletin 2021/08**

(21) Numéro de dépôt: **17811327.0**

(22) Date de dépôt: **12.12.2017**

(51) Int Cl.:
*F41G 3/06* *(2006.01)*　　*F41G 3/22* *(2006.01)*
*G01S 3/78* *(2006.01)*　　*G01S 17/87* *(2020.01)*
*G01S 3/786* *(2006.01)*　　*G01S 5/16* *(2006.01)*

(86) Numéro de dépôt international:
**PCT/EP2017/082409**

(87) Numéro de publication internationale:
**WO 2018/108897 (21.06.2018 Gazette 2018/25)**

(54) **DISPOSITIF DE LOCALISATION PAR RECALAGE STELLAIRE D'UNE CIBLE, DESTINÉ À ÊTRE EMBARQUÉ SUR UN PORTEUR MOBILE**

VORRICHTUNG ZUR ORTUNG EINES ZIELS MITTELS STELLARER RÜCKSTELLUNG, DIE DAZU BESTIMMT IST, AN BORD EINES MOBILEN TRÄGERS ZU SEIN

DEVICE FOR LOCATING A TARGET BY STELLAR RESETTING, INTENDED TO BE ON BOARD A MOBILE CARRIER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.12.2016 FR 1662631**

(43) Date de publication de la demande:
**23.10.2019 Bulletin 2019/43**

(73) Titulaire: **Safran Electronics & Defense**
**92100 Boulogne-Billancourt (FR)**

(72) Inventeurs:
• **ROBERT, Emmanuel**
**92100 Boulogne-Billancourt (FR)**
• **ROLAND, Flavien**
**92100 Boulogne-Billancourt (FR)**
• **DAVENEL, Arnaud**
**92100 Boulogne-Billancourt (FR)**
• **DELEAUX, Benjamin**
**92100 Boulogne-Billancourt (FR)**
• **ROBERFROID, David**
**92100 Boulogne-Billancourt (FR)**
• **REYMOND, Georges-Olivier**
**92100 Boulogne-Billancourt (FR)**

(74) Mandataire: **Regimbeau**
**20, rue de Chazelles**
**75847 Paris Cedex 17 (FR)**

(56) Documents cités:
**EP-A1- 1 440 329　　　EP-A1- 2 208 083**
**EP-A1- 3 073 223　　　WO-A1-2007/028826**
**US-A1- 2010 208 244　　US-A1- 2016 097 857**

**Description**

**DOMAINE DE L'INVENTION**

La présente invention concerne un dispositif de localisation d'une cible destiné à être embarqué sur un porteur et mettant en oeuvre un recalage stellaire.

**ETAT DE LA TECHNIQUE**

On connaît de l'état de la technique un dispositif de localisation d'une cible destiné à être embarqué sur un aéronef, le dispositif comprenant :

- une caméra mobile configurée pour être orientée vers une cible,
- une centrale inertielle configurée pour calculer des données de position et/ou d'orientation de la caméra,
- un module de localisation configuré pour estimer une position de la cible à partir des données fournies par la centrale inertielle.

Le dispositif est généralement monté sur une paroi de l'aéronef, de sorte à permettre la localisation de cibles au sol lorsque l'aéronef est en vol.

Or, les données fournies par la centrale inertielle peuvent être entachées de dérives, si bien que la position estimée par le module de localisation peut être très éloignée de la position réelle de la cible.

Pour corriger de telles dérives, il est connu d'embarquer un viseur stellaire dans l'aéronef. Le viseur stellaire est monté sur une paroi supérieure de l'aéronef, de sorte à être en regard du ciel.

Le viseur stellaire comprend une caméra qui acquiert des images d'au moins une étoile dont la position est prédéterminée, et un module configuré pour appliquer aux données fournies par la centrale inertielle un traitement appelé dans la littérature « recalage stellaire » ou « recalage par visée stellaire ». Les images acquises par la caméra du viseur stellaire permettent de révéler un écart entre la position supposée de l'étoile et sa position réelle. En vertu du recalage stellaire, cet écart est utilisé pour corriger des erreurs de dérive affectant les données calculées par la centrale inertielle. Cette correction est efficace en raison du fait que l'étoile est un point de référence fiable.

Toutefois, un porteur est sujet à des déformations mécaniques si bien que la position relative de la caméra utilisée pour observer la cible par rapport au viseur stellaire peut varier de façon imprédictible, et ainsi nuire à l'efficacité du recalage stellaire.

Par ailleurs, le viseur stellaire est un dispositif relativement encombrant et qui alourdit le porteur, ce qui est particulièrement préjudiciable lorsque le porteur est un aéronef léger de type drone.

Ainsi, il a été proposé dans le document EP 1 440 329 B1 un procédé de localisation d'une cible utilisant une caméra mobile.

**EXPOSE DE L'INVENTION**

Un but de l'invention est d'améliorer les performances de localisation d'un dispositif de localisation destiné à être embarqué sur un porteur, sans pour autant alourdir le porteur.

Il est dès lors proposé, selon un premier aspect de l'invention, un dispositif de localisation d'une cible destiné à être embarqué sur un porteur mobile, le dispositif comprenant :

- une caméra orientable par rapport au porteur dans

  o une première orientation en vue de la cible pour que la caméra acquière une image de la cible, et
  o une deuxième orientation en vue d'au moins une étoile prédéterminée pour que la caméra acquière au moins une image de l'étoile,

- une centrale inertielle configurée pour calculer des données de position et d'orientation de la caméra,
- un module de recalage stellaire configuré pour appliquer un recalage stellaire aux données calculées par la centrale inertielle sur la base de l'image de l'étoile, de sorte à produire des données de position et d'orientation recalées,
- un module de localisation configuré pour estimer une position de la cible à partir de l'image de la cible et des données recalées,
- une interface de communication avec un poste d'opérateur, la caméra étant en outre configurée pour passer d'une des première et deuxième orientations à l'autre des première et deuxième orientations en réponse à la réception par l'interface de communication d'une commande émise par le poste d'opérateur.

Dans le dispositif proposé, la même caméra sert à observer la cible à localiser et acquérir la ou les images montrant au moins une étoile prédéterminée qui est utilisée pour la mise en œuvre du recalage stellaire. Comme il est fait l'économie d'une caméra supplémentaire, l'encombrement total du dispositif de localisation est réduit.

De plus, les performances de localisation du dispositif ne sont pas parasitées par des déformations mécaniques du porteur.

Le procédé selon le premier aspect de l'invention peut être complété à l'aide des caractéristiques suivantes, prises seules ou en combinaison lorsque cela est techniquement possible.

Le dispositif de localisation peut comprendre rend un module d'estimation d'incertitude configuré pour estimer une incertitude sur une erreur susceptible d'affecter la précision de la position estimée par le module de localisation, et la caméra être configurée pour passer de la première orientation à la deuxième orientation lorsque l'incertitude franchit un premier seuil prédéterminé.

L'incertitude peut être une incertitude sur une erreur de position entachant la position de la cible estimée par le module de localisation.

L'incertitude peut alternativement être une incertitude sur une erreur de cap de la caméra entachant une donnée de cap calculée par la centrale inertielle.

Le premier seuil peut être inférieur ou égal à 0,3 milliradians.

La caméra peut être configurée pour passer de la deuxième orientation à la première orientation lorsque la deuxième incertitude franchit un deuxième seuil prédéterminé.

Le deuxième seuil peut être inférieur ou égal au premier seuil.

La caméra peut être configurée pour acquérir l'image de l'étoile prédéterminée dans un mode d'acquisition infrarouge dans lequel la caméra est sensible à des longueurs d'onde infrarouge.

Il est en outre proposé, selon un troisième aspect de l'invention, un aéronef, tel qu'un drone, comprenant un dispositif de localisation d'une cible selon le premier aspect de l'invention.

Il est en outre proposé, selon un troisième aspect de l'invention, un procédé de localisation d'une cible, comprenant des étapes de :

- orientation d'une caméra mobile embarquée dans un porteur mobile dans une première orientation dans laquelle la cible est en vue de la caméra,
- calcul, par une centrale inertielle, de données de position et d'orientation de la caméra,
- acquisition par la caméra d'au moins une image de la cible,
- orientation de la caméra dans une deuxième orientation par rapport au porteur dans laquelle une étoile prédéterminée est en vue de la caméra,
- acquisition d'au moins une image de l'étoile par la caméra,
- recalage stellaire appliqué aux données calculées par la centrale inertielle sur la base de l'image de l'étoile, de sorte à produire des données de position et d'orientation recalées,
- estimation d'une position de la cible à partir de l'image de la cible et des données recalées,

dans lequel la caméra passe d'une des première et deuxième orientations à l'autre en réponse à la réception d'une commande émise par un poste d'opérateur.

## DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

- La figure 1 est une vue dans un plan vertical par rapport au sol d'une cible, d'un porteur embarquant un dispositif de localisation de la cible, et d'une étoile.
- La figure 2 est une vue schématique montrant les composants internes du dispositif de localisation, selon un mode de réalisation de l'invention.
- La figure 3 est une vue dans un plan horizontal par rapport au sol du porteur et de la cible déjà représentés en figure 1.
- La figure 4 est un organigramme d'étapes d'un procédé de localisation d'une cible selon un mode de réalisation de l'invention.

Sur l'ensemble des figures, les éléments similaires portent des références identiques.

## DESCRIPTION DETAILLEE DE L'INVENTION

*Dispositif de localisation de cible*

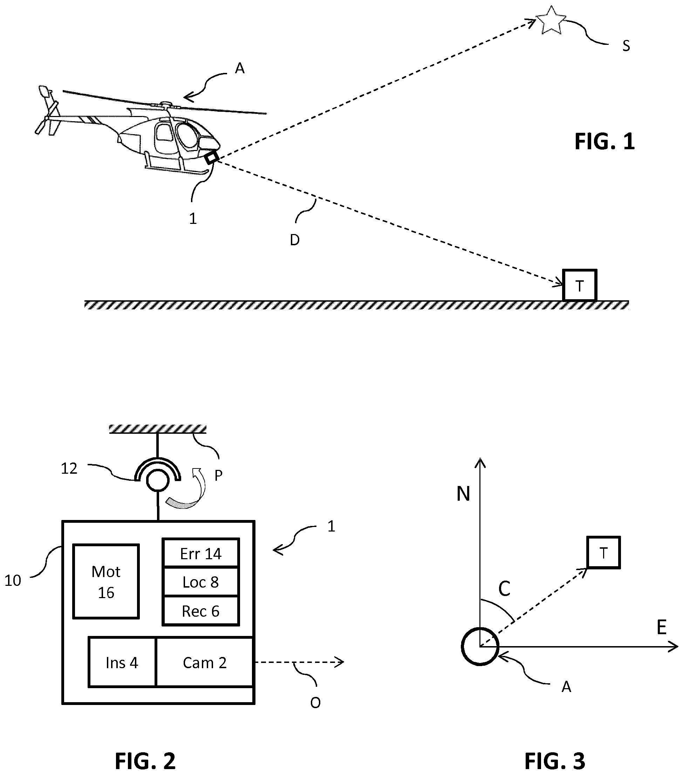

En référence à la **figure 1,** un porteur mobile tel qu'un aéronef A comprend un dispositif de localisation 1 d'une cible T. Est également représenté sur la figure 1 une étoile S.

L'aéronef A est un drone, un hélicoptère, un avion, etc. Sur la figure 1, l'aéronef est un hélicoptère.

En référence à la **figure 2,** le dispositif de localisation 1 comprend une caméra 2, une centrale inertielle 4, un module de recalage stellaire 6 et un module de localisation 8 de cible T.

Le dispositif de localisation 1 est monté à une paroi inférieure P de l'aéronef A, c'est-à-dire une paroi destinée à être en regard du sol lorsque l'aéronef A est en vol.

En variante, le dispositif de localisation 1 peut être monté sur une autre paroi de l'aéronef A, par exemple une paroi supérieure de l'aéronef A, c'est-à-dire une paroi destinée à être en regard du ciel lorsque l'aéronef A est en vol.

Le dispositif de localisation 1 comprend en outre un boîtier 10 monté à rotation sur la paroi de l'aéronef A, via par exemple une liaison rotule 12.

La caméra 2, la centrale inertielle 4, le module de recalage 6 et le module de localisation 8 sont logés dans le boîtier 10 et par exemple fixes par rapport à celui-ci.

En particulier, la centrale inertielle 4 est de préférence solidaire de la caméra 2.

La caméra 2 est mobile entre plusieurs orientations par rapport au porteur A.

La caméra 2 est d'une part susceptible d'être orientée vers le sol.

La caméra 2 est d'autre part susceptible d'être orientée vers le ciel. De préférence, la caméra 2 est susceptible de prendre une orientation dans laquelle l'axe optique de la caméra 2 a une élévation maximale de 30 degrés (c'est-à-dire que l'axe optique de la caméra 2 forme un angle positif de 30 degrés par rapport à un plan horizontal parallèle au sol et ne va pas plus haut vers le zénith).

La caméra 2 est montée à l'aéronef A de sorte que l'axe optique de la caméra 2 puisse être orientée vers le sol ou vers le ciel, sans pour autant être gênée par la paroi à laquelle le dispositif est monté, ni plus généralement être gênée par le corps de l'aéronef A. La caméra est par exemple monté à bord avant de la paroi inférieure P de l'aéronef A, comme représenté en figure 1, ou bien à bord latéral de cette paroi P.

En fait, comme la caméra 2 est solidaire du boîtier 10, c'est le dispositif de localisation 1 dans son ensemble qui est mobile en rotation par rapport à la paroi de l'aéronef et susceptible d'adopter une telle élévation.

La caméra 2 comprend un objectif pourvu d'un réticule. Le réticule passe par l'axe optique O de la caméra 2.

La caméra 2 présente un champ de vue instantané (« instantaneous field of view » ou IFOV en anglais) inférieur ou égal à 0,1 milliradians. Le champ IFOV est le champ de vue associé à un pixel d'une image acquise par la caméra 2. Une telle caméra 2 est adaptée à la localisation de cibles à très grande distance.

Par ailleurs, la caméra 2 est sensible à des longueurs d'onde dans le domaine visible et/ou infrarouge, par exemple des longueurs infrarouges dans la bande SWIR (Short-Wavelength infrared) allant de 1 à 2 micromètres.

La caméra 2 est par exemple configurable dans plusieurs modes d'acquisition, chaque mode d'acquisition rendant la caméra 2 sensible à des longueurs d'ondes propres à ce mode d'acquisition. La caméra 2 est par exemple configurable non seulement dans un mode d'acquisition infrarouge, dans lequel elle est rendue sensible auxdites longueurs d'ondes dans le domaine infrarouge, mais également configurable dans d'autres mode d'acquisitions (visible, UV, etc.).

Par ailleurs, la centrale inertielle 4 est un dispositif connu en lui-même comprenant une pluralité de capteurs inertiels, typiquement des accéléromètres et des gyromètres.

La centrale inertielle 4 est configurée pour calculer des données de position et d'orientation de la caméra 2.

Le module de recalage stellaire 6 est connu de l'état de la technique, par exemple du document EP 3 073 223 A1.

Le module de localisation 8 est configuré pour estimer une position de la cible T, également connu de l'état de la technique.

Le module de localisation 8 comprend un télémètre. Le télémètre est configuré pour estimer la distance entre la caméra 2 et une cible T vue par la caméra 2.

Le télémètre peut être un télémètre actif, par exemple laser, connu en lui-même.

Alternativement, le télémètre est de type passif. Il calcule la distance entre la caméra 2 et la cible T en se basant sur un modèle numérique du terrain dans lequel se trouve la cible T.

Le dispositif comprend en outre un module d'estimation d'incertitude 14 configuré pour estimer une incertitude sur une erreur susceptible d'affecter la précision d'une position de cible T estimée par le module de localisation 8.

Les modules de recalage, de localisation et d'estimation peuvent être des dispositifs physiques distincts, un même dispositif physique, être différents programmes d'ordinateurs exécutés par un ou plusieurs processeur(s) du dispositif, ou bien être différentes parties d'un même programme d'ordinateur exécuté par un ou plusieurs processeur(s) du dispositif.

Le dispositif comprend par ailleurs un moteur 16 pour mettre en rotation le dispositif par rapport au porteur. Le dispositif, et notamment le moteur 16, est alimenté en énergie électrique par le porteur.

Le dispositif comprend en outre une interface de communication avec un poste d'opérateur.

Dans le cas d'un aéronef A autre qu'un drone, le poste d'opérateur peut être un poste de l'aéronef A : l'interface de communication est par exemple une interface de communication filaire ou une interface de communication radio sans fil.

Le poste d'opérateur peut être alternativement dans une station au sol ou dans un autre porteur que celui qui embarque le dispositif. Dans ce cas, l'interface de communication est une interface de communication radio sans fil.

Le dispositif forme typiquement une boule gyro-stabilisée (BGS) fonctionnant de façon autonome par rapport à l'aéronef A hormis son alimentation en énergie par l'aéronef A.

Dans d'autres variantes de réalisation, les modules 6, 8, 14 peuvent être déportés au sein de l'aéronef.

*Procédé de localisation de cible sans recalage stellaire*

On suppose que l'aéronef A est en vol. Une cible T se trouve au sol.

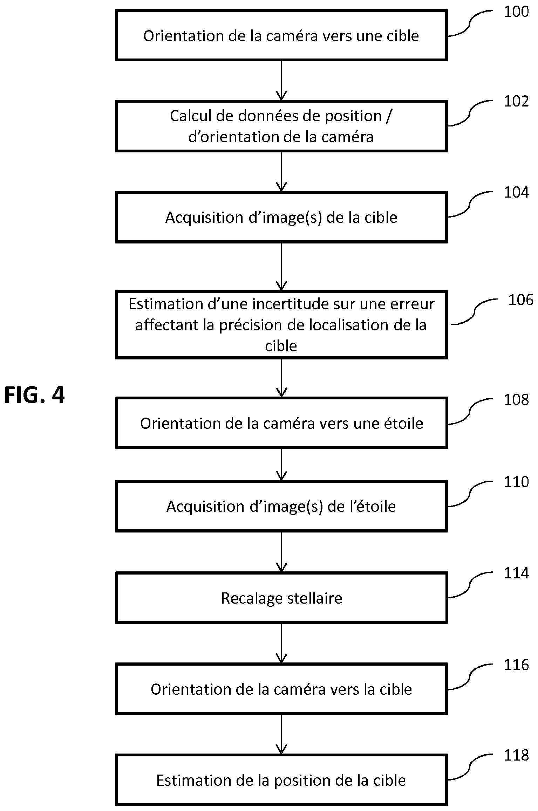

En référence à la **figure 4,** la caméra 2 est orientée vers la cible T, selon une première orientation (étape 100).

Pour localiser la cible T, les étapes suivantes sont mises en œuvre par le dispositif.

La centrale inertielle 4 calcule des données de position et/ou d'orientation de la caméra 2 (étape 102).

La caméra acquiert au moins une image de la cible T (étape 104).

Le télémètre (actif par laser ou passif) estime la distance entre la cible T vue par la caméra 2 et la caméra 2.

Le module de localisation 8 estime une position de la cible T en combinant la distance estimée par le télémètre aux données d'orientation et de position de la caméra 2 et à l'image acquise (étape 118).

De façon optionnelle, est également pris en compte dans l'estimation mise en œuvre par le module de localisation 8, un écart angulaire entre l'axe optique de la caméra 2 et un axe passant par un point de la caméra 2 et un point de la cible T. Cet écart angulaire est calculé en fonction d'un écart en pixels, dans une image acquise par la caméra 2 dans la première orientation au cours de l'étape 104, entre le réticule de la caméra 2 passant par l'axe optique et un pixel de la cible T. Cet écart est nul lorsque le réticule se superpose à la cible T dans l'image acquise. Il est par exemple envisageable d'orienter la caméra 2 de sorte à obtenir une telle superposition, ce qui permet de ne pas avoir à prendre en compte cet écart dans l'estimation mise en œuvre par le module de localisation 8.

Le module de localisation 8 peut ainsi utiliser une formule du type suivant pour une telle estimation :

$$P_{cible} = f_1(E) + f_2(\theta) + f_3(D)$$

Où

- $P_{cible}$ est la position de la cible T estimée par le module de localisation 8, cette position étant exprimée dans un repère lié à la Terre,
- E est un état de navigation estimé par la centrale inertielle 4 comprenant au moins une donnée de position $P_{BGS}$ et au moins une donnée d'orientation $Orientation_{BGS}$ de la caméra 2 fournies par la centrale inertielle 4, ces données étant par exemple exprimées dans un repère géographique centré sur le dispositif et comprend un axe pointant vers le nord de la Terre, un axe pointant vers l'est, et un troisième axe, les trois axes formant un repère orthonormé,
- $\theta$ est un écart angulaire entre l'axe optique de la caméra 2 et un axe passant par un point de la caméra 2 et un point cible T. Cet écart angulaire est fonction d'un écart en pixels, dans une image acquise par la caméra 2 dans la première orientation, entre le réticule de la caméra 2 et un pixel de la cible T (optionnel comme indiqué ci-dessus),
- D est la distance mesurée par le télémètre,
- Les fonctions $f_i$ sont des fonctions prédéterminées.

*Procédé de localisation de cible avec recalage stellaire*

Comme indiqué en introduction, les données produites par la centrale inertielle 4 au cours de l'étape 102 peuvent être entachées d'erreurs, notamment des erreurs de dérive.

Une erreur particulièrement préjudiciable à la précision de localisation offerte par le dispositif est une erreur entachant un cap de la caméra 2 calculé par la centrale inertielle 4. En référence à la **figure 3,** le cap est un angle C formé entre :

- L'axe O de la caméra 2 projeté dans un plan horizontal parallèle au sol (le plan de la figure 3, qui montre l'aéronef et la cible vus de dessus) et

- un axe N pointant vers le nord compris dans ce plan horizontal (sachant que l'axe E représenté sur la figure 3 est un axe pointant vers l'est).

Ainsi, lorsque la cible T se trouve à une grande distance de l'aéronef A, une erreur de cap, même minime, influe de manière très importante sur l'erreur finale de localisation commise par le dispositif.

Alors que la caméra 2 adopte la première orientation (vers la cible T), le module d'estimation estime une incertitude sur une erreur de cap commise par la centrale inertielle 4 (étape 106). Le module d'estimation peut être la centrale inertielle 4 elle-même : la centrale inertielle 4 fournit alors directement, en sus des données de position et d'orientation de la caméra 2, une donnée d'incertitude sur une erreur de cap.

Lorsque l'incertitude sur l'erreur de cap dépasse un seuil prédéterminé, le module d'estimation commande un déplacement de la caméra 2 vers une deuxième orientation adaptée pour qu'une étoile S prédéterminée soit en vue de la caméra 2 (étape 108).

De préférence, le premier seuil est inférieur ou égal à 0,3 milliradians, par exemple 0,1 milliradians.

La deuxième orientation est déterminée par le module d'estimation en fonction des données d'orientation fournie par la centrale inertielle 4, et des informations de positionnement de l'étoile S qui sont prédéterminées.

Dans la deuxième orientation, la caméra 2 acquiert au moins une image montrant l'étoile S (étape 110).

A cause des erreurs qui entachent les données d'orientation de la centrale inertielle 4, il existe un certain écart en pixels, dans l'image acquise par la caméra 2 dans la deuxième orientation, entre un pixel montrant le réticule de la caméra 2 et un pixel montrant l'étoile S. Cet écart est donc représentatif des erreurs de positionnement et d'orientation de la centrale inertielle 4.

Le module de recalage 6 met en œuvre un recalage stellaire connu de l'état de la technique sur la base des données de position et/ou d'orientation de la caméra 2, de sorte à produire des données de position et/ou d'orientation recalées (étape 114).

Le module de localisation 8 utilise les données recalées en lieu et place des données entachées d'erreurs fournies par la centrale inertielle 4, pour estimer la position de la cible T au cours de l'étape 118 précédemment mentionnée.

De préférence, la caméra 2 est configurée dans son mode d'acquisition infrarouge pour acquérir les images montrant l'étoile S. Ce mode d'acquisition infrarouge est celui qui permet d'obtenir des images de l'étoile S les plus sensibles et donc d'améliorer la capacité de correction du recalage stellaire notamment en réduisant la durée pendant laquelle la cible T n'est pas observée.

Pendant que la caméra 2 se trouve dans la deuxième orientation, les étapes d'acquisition d'image 110 et 114 sont répétées pour une étoile, et peuvent en outre être mises en œuvre pour au moins une autre étoile, après réorientation de la caméra vers cette autre étoile au cours de l'étape 108.

L'étape d'estimation d'incertitude 106 est en outre également répétée dans le temps, par exemple à intervalles réguliers, même pendant que la caméra est orientée vers une étoile.

Lorsque le module d'estimation 14 détecte que l'erreur de cap redescend en dessous d'un deuxième seuil prédéterminé, le module d'estimation commande un déplacement de la caméra 2 vers la première orientation (qu'il aura préalablement mémorisée au moment de la quitter) (étape 116).

Le deuxième seuil est inférieur ou égal au premier seuil.

Si la caméra 2 était configurée dans un mode d'acquisition différent du mode d'acquisition infrarouge lorsque le franchissement du premier seuil a été détecté, la caméra 2 est reconfigurée dans ce mode d'acquisition d'origine pour observer la cible T.

D'autres critères de passage d'une orientation de la caméra 2 à l'autre peuvent être utilisés.

La caméra 2 peut par exemple être configurée pour passer d'une des première et deuxième orientations à l'autre orientation (étapes 108, 116) en réponse à la réception par l'interface de communication d'une commande émise par le poste d'opérateur. Par exemple, Il se peut en effet s'avérer urgent de réorienter la caméra 2 vers la cible T afin de l'observer alors que l'incertitude n'est pas redescendue en dessous du deuxième seuil, et ce en dépit du fait que les conditions ne sont pas encore optimales pour calculer une position précise de cette cible T.

Dans le cas particulier où l'interface de communication reçoit une commande de réorientation de la première orientation à la deuxième orientation, la caméra peut exécuter cette commande de manière différée. Dans certaines situations, la caméra ne pourrait pas voir l'étoile si elle était immédiatement réorientée dans la deuxième position, par exemple lorsque l'aéronef est sur le dos ou que le ciel n'est pas dans la zone d'orientations possibles de la caméra. En conséquence, non seulement la cible ne serait plus en vue de la caméra, mais le recalage stellaire ne pourrait également pas fonctionner correctement.

Dès lors, la caméra est avantageusement configurée pour attendre, suite à la réception de la commande, que le porteur mobile ait une orientation par rapport à l'étoile permettant à la caméra de voir l'étoile dans la deuxième orientation, avant de passer de la première à la deuxième orientation. La caméra peut par exemple comprendre des moyens de détection d'orientation de l'aéronef par rapport au sol ou au ciel, ou bien recevoir, par son interface de communication, des informations lui permettant de prendre connaissance de cette orientation pour gérer cette attente, à partir des informations disponibles au niveau du porteur mobile.

Par ailleurs, une incertitude autre que l'incertitude sur l'erreur de cap peut être utilisée comme critères de déclenchement d'un passage d'une orientation à l'autre.

Par exemple, il peut être prévu d'utiliser à cet effet une incertitude sur la position de la cible T, cette incertitude étant calculée par le module de localisation 8 en sus de l'estimation de position de la cible T elle-même. Dans ce cas, le premier seuil est de préférence choisi inférieur ou égal à 10 mètres.

Une telle incertitude d'erreur de position, se présentant sous la forme d'une covariance $Cov_{POS\_cible}$, est calculée typiquement comme suit par le module d'estimation 14 :

$$Cov_{POS_{cible}} = F1.Cov_{INS}.F1^T + F2.Cov_{err\_cam}.F2^T + F3.Cov_{err\_telem}.F3^T$$

$$F1 = \frac{df_1}{dE}$$

$$F2 = \frac{df_2}{d\Theta}$$

$$F3 = \frac{df_3}{dD}$$

Avec :

- $Cov_{INS}$ : covariance de l'état E de navigation estimé par la centrale inertiel (cet état comprenant les données de position et d'orientation estimées au cours de l'étape 102)
- $Cov_{err\_cam}$ : covariance des bruits de mesures de désignation du point d'intérêt dans le repère de la caméra 2,
- $Cov_{err\_telem}$ : covariance des bruits de mesures de désignation de la distance D entre la caméra 2 et la cible (le télémètre laser en général).

Cette équation est une simple somme, car les erreurs sont indépendantes.

Le dispositif de localisation 1 est avantageusement mise en œuvre dans un porteur de type aéronef A, ce type de porteur ayant généralement pour mission de localiser des cibles à très grande distance, en particulier un drone. Toutefois, ce dispositif peut être embarqué sur d'autres types de porteurs : véhicule terrestre, navire, etc.

**Revendications**

1. Dispositif de localisation (1) d'une cible (T) destiné à être embarqué sur un porteur (A) mobile, le dispositif comprenant :

   • une caméra (2) orientable par rapport au porteur (A) dans :

      ○ une première orientation en vue de la cible pour que la caméra acquière une image de la cible (T), et
      ○ une deuxième orientation en vue d'au moins une étoile prédéterminée pour que la caméra acquière au moins une image de l'étoile,

   • une centrale inertielle (4) configurée pour calculer des données de position et d'orientation de la caméra (2),
   • un module de recalage stellaire (6) configuré pour appliquer un recalage stellaire aux données calculées par la centrale inertielle (4) sur la base de l'image de l'étoile, de sorte à produire des données de position et d'orientation recalées,
   • un module de localisation (8) configuré pour estimer une position de la cible (T) à partir de l'image de la cible (T) et des données recalées,

le dispositif étant **caractérisé en ce qu'**il comprend une interface de communication avec un poste d'opérateur, et **en ce que** la caméra (2) est en outre configurée pour passer d'une des première et deuxième orientations à l'autre en réponse à la réception par l'interface de communication d'une commande émise par le poste d'opérateur.

2. Dispositif (1) selon la revendication précédente, dans lequel la caméra est configurée pour attendre, suite à la réception de la commande, que le porteur mobile ait une orientation par rapport à l'étoile permettant à la caméra de voir l'étoile dans la deuxième orientation, avant de passer de la première à la deuxième orientation.

3. Dispositif (1) selon l'une des revendications précédentes, comprenant un module d'estimation d'incertitude (14) configuré pour estimer une incertitude sur une erreur susceptible d'affecter la précision de la position estimée par le module de localisation (8), et dans lequel la caméra (2) est configuré pour passer de la première orientation à la deuxième orientation lorsque l'incertitude franchit un premier seuil prédéterminé.

4. Dispositif (1) selon la revendication précédente, dans lequel l'incertitude est une incertitude sur une erreur de position entachant la position de la cible (T) estimée par le module de localisation (8).

5. Dispositif (1) selon l'une des revendications 3 à 4, dans lequel l'incertitude est une incertitude sur une erreur de cap de la caméra (2) entachant une donnée de cap calculée par la centrale inertielle (4).

6. Dispositif (1) selon la revendication précédente, dans lequel le premier seuil est inférieur ou égal à 0,3 milliradians.

7. Dispositif (1) selon l'une des revendications précédentes, comprenant un module d'estimation d'incertitude (14) configuré pour estimer une incertitude sur une erreur susceptible d'affecter la précision de la position estimée par le module de localisation (8), et dans lequel la caméra (2) est configurée pour passer de la deuxième orientation à la première orientation lorsque la deuxième incertitude franchit un deuxième seuil prédéterminé.

8. Dispositif (1) selon la revendication 3 et la revendication 7 prises en combinaison, dans lequel le deuxième seuil est inférieur ou égal au premier seuil.

9. Dispositif (1) selon l'une des revendications précédentes, dans lequel la caméra (2) est configurée pour acquérir l'image de l'étoile prédéterminée dans un mode d'acquisition infrarouge dans lequel la caméra (2) est sensible à des longueurs d'onde infrarouge.

10. Aéronef (A), tel qu'un drone, comprenant un dispositif de localisation (1) d'une cible (T) selon l'une des revendications précédentes.

11. Procédé de localisation d'une cible (T), comprenant des étapes de :

   • orientation (100) d'une caméra (2) mobile embarquée dans un porteur (A) mobile dans une première orientation dans laquelle la cible (T) est en vue de la caméra (2),
   • calcul (102), par une centrale inertielle (4), de données de position et d'orientation de la caméra (2),
   • acquisition (104) par la caméra (2) d'au moins une image de la cible (T),
   • orientation (108) de la caméra (2) dans une deuxième orientation par rapport au porteur (A) dans laquelle une étoile prédéterminée est en vue de la caméra (2),
   • acquisition (110) d'au moins une image de l'étoile par la caméra (2),
   • recalage stellaire (114) appliqué aux données calculées par la centrale inertielle (4) sur la base de l'image de l'étoile, de sorte à produire des données de position et d'orientation recalées,
   • estimation (118) d'une position de la cible (T) à partir de l'image de la cible (T) et des données recalées,

   le procédé étant **caractérisé en ce que** la caméra (2) passe d'une des première et deuxième orientations à l'autre en réponse à la réception d'une commande émise par un poste d'opérateur.

12. Procédé selon la revendication précédente, dans lequel la caméra attend, suite à la réception de la commande, que le porteur mobile ait une orientation par rapport à l'étoile permettant à la caméra de voir l'étoile dans la deuxième orientation, avant de passer de la première à la deuxième orientation.

13. Procédé selon l'une des revendications 11 et 12, dans lequel le porteur (A) est un aéronef, par exemple un drone.

**Patentansprüche**

1. Vorrichtung (1) zur Ortung eines Ziels (T), die dazu bestimmt ist, an Bord eines mobilen Trägers (A) zu sein, wobei die Vorrichtung umfasst:

   • eine Kamera (2), die in Bezug auf den Träger (A) ausrichtbar ist in:

      o einer ersten Ausrichtung im Hinblick auf das Ziel, damit die Kamera ein Bild des Ziels (T) erfasst, und
      o einer zweiten Ausrichtung im Hinblick auf mindestens einen vorbestimmten Stern, damit die Kamera mindestens ein Bild des Sterns erfasst,

   • ein Trägheitsnavigationssystem (4), das ausgestaltet ist, um Positions- und Ausrichtungsdaten der Kamera (2) zu berechnen,
   • ein Modul (6) zur stellaren Rückstellung, das ausgestaltet ist, um basierend auf dem Bild des Sterns eine stellare Rückstellung auf die von dem Trägheitsnavigationssystem (4) berechneten Daten anzuwenden, derart dass rückgestellte Positions- und Ausrichtungsdaten erzeugt werden,
   • ein Ortungsmodul (8), das ausgestaltet ist, um ausgehend von dem Bild des Ziels (T) und den rückgestellten Daten eine Position des Ziels (T) zu schätzen,

   wobei die Vorrichtung **dadurch gekennzeichnet ist, dass** sie eine Schnittstelle zur Kommunikation mit einem Operatorterminal umfasst, und dadurch, dass die Kamera (2) ferner ausgestaltet ist, um als Reaktion auf den Empfang eines von dem Operatorterminal ausgegebenen Befehls über die Kommunikationsschnittstelle von einer von der ersten und der zweiten Ausrichtung in die andere überzugehen.

2. Vorrichtung (1) nach dem vorhergehenden Anspruch, wobei die Kamera ausgestaltet ist, um im Anschluss an den Empfang des Befehls darauf zu warten, dass der mobile Träger eine Ausrichtung in Bezug auf den Stern aufweist, die es der Kamera erlaubt, vor dem Übergang von der ersten in die zweite Ausrichtung den Stern in der zweiten Ausrichtung zu sehen.

3. Vorrichtung (1) nach einem der vorhergehenden Ansprüche, die ein Unsicherheits-Schätzungsmodul (14) umfasst, das ausgestaltet ist, um eine Unsicherheit über einen Fehler zu schätzen, der die Präzision der von dem Ortungsmodul (8) geschätzten Position beeinträchtigen kann, und wobei die Kamera (2) ausgestaltet ist, von der ersten in die zweite Ausrichtung überzugehen, wenn die Unsicherheit einen ersten vorbestimmten Schwellenwert überschreitet.

4. Vorrichtung (1) nach dem vorhergehenden Anspruch, wobei die Unsicherheit eine Unsicherheit über einen Positionsfehler ist, der die von dem Ortungsmodul (8) geschätzte Position des Ziels (T) verzerrt.

5. Vorrichtung (1) nach einem der Ansprüche 3 bis 4, wobei die Unsicherheit eine Unsicherheit über einen Kursfehler der Kamera (2) ist, der ein von dem Trägheitsnavigationssystem (4) berechnetes Kursdatenelement verzerrt.

6. Vorrichtung (1) nach dem vorhergehenden Anspruch, wobei der erste Schwellenwert kleiner oder gleich 0,3 Milliradiant ist.

7. Vorrichtung (1) nach einem der vorhergehenden Ansprüche, das ein Unsicherheitsschätzungsmodul (14) umfasst, das ausgestaltet ist, um eine Unsicherheit über einen Fehler zu schätzen, der die Präzision der von dem Ortungsmodul (8) geschätzten Position beeinträchtigen kann, und wobei die Kamera (2) ausgestaltet ist, um von der zweiten Ausrichtung in die erste Ausrichtung überzugehen, wenn die zweite Unsicherheit einen zweiten vorbestimmten Schwellenwert überschreitet.

8. Vorrichtung (1) nach Anspruch 3 und Anspruch 7 in Kombination, wobei der zweite Schwellenwert kleiner oder gleich dem ersten Schwellenwert ist.

9. Vorrichtung (1) nach einem der vorhergehenden Ansprüche, wobei die Kamera (2) ausgestaltet ist, um das Bild des vorbestimmten Sterns in einem Infrarot-Erfassungsmodus zu erfassen, in dem die Kamera (2) auf Infrarot-Wellenlängen empfindlich ist.

10. Luftfahrzeug (A), wie beispielsweise eine Drohne, die eine Vorrichtung (1) zur Ortung eines Ziels (T) nach einem der vorhergehenden Ansprüche umfasst.

11. Verfahren zur Ortung eines Ziels (T), das die folgenden Schritte umfasst:

 • Ausrichten (100) einer mobilen Kamera (2), die sich an Bord in einem mobilen Träger (A) befindet, in einer ersten Ausrichtung, in der das Ziel (T) von der Kamera (2) gesehen wird,
 • Berechnen (102) von Positions- und Ausrichtungsdaten der Kamera (2) durch ein Trägheitsnavigationssystem (4),
 • Erfassen (104) von mindestens einem Bild des Ziels (T) durch die Kamera (2),
 • Ausrichten (108) der Kamera (2) in einer zweiten Ausrichtung in Bezug auf den Träger (A), in der ein vorbestimmter Stern sich in Sicht der Kamera (2) befindet,
 • Erfassen (110) von mindestens einem Bild des Sterns durch die Kamera (2),
 • stellares Rückstellen (114), das auf die von dem Trägheitsnavigationssystem (4) berechneten Daten angewandt wird, basierend auf dem Bild des Sterns, derart, dass rückgestellte Positions- und Ausrichtungsdaten erzeugt werden,
 • Schätzen (118) einer Position des Ziels (T) ausgehend von dem Bild des Ziels (T) und den rückgestellten Daten,

wobei das Verfahren **dadurch gekennzeichnet ist, dass** die Kamera (2) als Reaktion auf den Empfang eines von einem Operatorterminal ausgegebenen Befehls von einer von der ersten und der zweiten Ausrichtung in die andere übergeht.

12. Verfahren nach dem vorhergehenden Anspruch, wobei die Kamera im Anschluss an den Empfang des Befehls vor dem Übergang von der ersten in die zweite Ausrichtung wartet, bis der mobile Träger eine Ausrichtung in Bezug auf den Stern aufweist, die es der Kamera ermöglicht, den Stern in der zweiten Ausrichtung zu sehen.

13. Verfahren nach einem der Ansprüche 11 und 12, wobei der Träger (A) ein Luftfahrzeug, zum Beispiel eine Drohne, ist.

**Claims**

1. A device for locating (1) a target (T) intended to be embedded on a mobile carrier (A), the device comprising:

 • a camera (2) orientable relative to the carrier (A) in:

  o a first orientation in sight of the target so that the camera acquires an image of the target (T), and
  o a second orientation in sight of at least one predetermined star so that the camera acquires at least one image of the star,

 • an inertial unit (4) configured to calculate position and orientation data of the camera (2),
 • a stellar resetting module (6) configured to apply a stellar resetting to the data calculated by the inertial unit (4) based on the image of the star, so as to produce reset position and orientation data,
 • a location module (8) configured to estimate a position of the target (T) from the image of the target (T) and the reset data,

the device being **characterized in that** it comprises a communication interface with an operator station, and **in that** the camera (2) is further configured to switch from one of the first and second orientations to the other in response to the receipt by the communication interface of a command emitted by the operator station.

2. The device (1) according to the preceding claim, wherein the camera is configured to wait, following the receipt of the command, for the mobile carrier to have an orientation relative to the star allowing the camera to see the star in the second orientation, before switching from the first to the second orientation.

3. The device (1) according to any of the preceding claims, comprising an uncertainty estimation module (14) configured to estimate an uncertainty on an error likely to affect the accuracy of the position estimated by the location module (8), and wherein the camera (2) is configured to switch from the first orientation to the second orientation when the uncertainty crosses a first predetermined threshold.

4. The device (1) according to the preceding claim, wherein the uncertainty is an uncertainty on a position error altering

**EP 3 555 550 B1**

the position of the target (T) estimated by the location module (8).

5. The device (1) according to any of claims 3 to 4, wherein the uncertainty is an uncertainty on a heading error of the camera (2) altering a heading data calculated by the inertial unit (4).

6. The device (1) according to the preceding claim, wherein the first threshold is less than or equal to 0.3 milliradians.

7. The device (1) according to any of the preceding claims, comprising an uncertainty estimation module (14) configured to estimate an uncertainty on an error likely to affect the accuracy of the position estimated by the location module (8), and wherein the camera (2) is configured to switch from the second orientation to the first orientation when the second uncertainty crosses a second predetermined threshold.

8. The device (1) according to claim 3 and claim 7 taken in combination, wherein the second threshold is less than or equal to the first threshold.

9. The device (1) according to any of the preceding claims, wherein the camera (2) is configured to acquire the image of the predetermined star in an infrared acquisition mode in which the camera (2) is sensitive to infrared wavelengths.

10. An aircraft (A), such as a drone, comprising a device for locating (1) a target (T) according to any of the preceding claims.

11. A method for locating a target (T), comprising the steps of:

   • orienting (100) a mobile camera (2) embedded on a mobile carrier (A) in a first orientation in which the target (T) is in sight of the camera (2),
   • calculating (102), by an inertial unit (4), position and orientation data of the camera (2),
   • acquiring (104) by the camera (2) at least one image of the target (T),
   • orienting (108) the camera (2) in a second orientation relative to the carrier (A) in which a predetermined star is in sight of the camera (2),
   • acquiring (110) at least one image of the star by the camera (2),
   • stellar resetting (114) applied to the data calculated by the inertial unit (4) based on the image of the star, so as to produce reset position and orientation data,
   • estimating (118) a position of the target (T) from the image of the target (T) and the reset data,

   the method being **characterized in that** the camera (2) switches from one of the first and second orientations to the other in response to the receipt of a command emitted from an operator station.

12. The method according to the preceding claim, wherein the camera waits, following the receipt of the command, for the mobile carrier to have an orientation relative to the star allowing the camera to see the star in the second orientation, before switching from the first to the second orientation.

13. The method according to any of claims 11 and 12, wherein the carrier (A) is an aircraft, for example a drone.

FIG. 1

FIG. 2

FIG. 3

**FIG. 4**

Orientation de la caméra vers une cible — 100

Calcul de données de position / d'orientation de la caméra — 102

Acquisition d'image(s) de la cible — 104

Estimation d'une incertitude sur une erreur affectant la précision de localisation de la cible — 106

Orientation de la caméra vers une étoile — 108

Acquisition d'image(s) de l'étoile — 110

Recalage stellaire — 114

Orientation de la caméra vers la cible — 116

Estimation de la position de la cible — 118

## RÉFÉRENCES CITÉES DANS LA DESCRIPTION

**Documents brevets cités dans la description**

- EP 1440329 B1

- EP 3073223 A1